# EUROPÄISCHE PATENTSCHRIFT

(11) **EP 2 815 230 B1**
(45) Veröffentlichungstag und Bekanntmachung des Hinweises auf die Patenterteilung: **14.10.2020**
(21) Anmeldenummer: 13701760.4
(22) Anmeldetag: 25.01.2013
(51) Int. Cl.: G01N 21/95

(54) **INSPEKTIONSVERFAHREN**
INSPECTION METHOD
PROCÉDÉ DE CONTRÔLE

(30) Priorität: 16.02.2012 DE 102012101242
(43) Veröffentlichungstag der Anmeldung: 24.12.2014
(73) Patentinhaber: Unity Semiconductor GmbH, 01099 Dresden (DE)
(72) Erfinder: SIAHKALI, Arman, 01099 Dresden (DE); SROCKA, Bernd, 13125 Berlin (DE); RAUE, Hagen, 02633 Göda (DE)
(74) Vertreter: Weisse, Renate
(86) Internationale Anmeldenummer: PCT/EP2013/051410
(87) Internationale Veröffentlichungsnummer: WO 2013/120679

(56) Entgegenhaltungen:
- WO-A1-00/73994
- US-B1- 6 947 587
- US-B1- 7 012 684
- Anonymous: "Gleitender Mittelwert - Wikipedia", , 4 December 2019 (2019-12-04), XP55649773, Retrieved from the Internet: URL:https://de.wikipedia.org/wiki/Gleitend er_Mittelwert [retrieved on 2019-12-05]

## Beschreibung

### Technisches Gebiet

Die Erfindung betrifft ein Verfahren zur Inspektion von flachen Objekten, insbesondere Wafer.

In verschiedenen Industriezweigen werden flächige Produkte mit optischen, bildgebenden Verfahren auf Fehler untersucht. In der Halbleiter- und Solarzellenindustrie sind dies unter anderem Wafer. Wafer sind Scheiben aus Halbleiter-, Glas-, Folien- oder Keramikmaterialien. Die Wafer werden in bestimmten Anwendungen typischerweise ganzflächig oder zumindest auf großen Teilflächen geprüft. Diese Prüfung nennt man Makro-Inspektion. Die für die Erkennung der gesuchten Fehler erforderliche laterale Auflösung steigt dabei mit der Weiterentwicklung der allgemeinen Produktionstechnik. Typischerweise werden für neue Technologien Auflösungen in der Makro-Inspektion von 30 µm verwirklicht. Gleichzeitig sind Geräte mit einem hohen Durchsatz an zu prüfenden Wafern wünschenswert.

Analoge Aufgabenstellungen sind in anderen Industriezweigen zu lösen. In der Flat-Panel-Industrie sind die Displays in der Produktion auf Fehler zu prüfen. Dabei werden zum Teil ganzflächig auf den Displays bildgebende Verfahren zur Fehlersuche benutzt. In der Elektroindustrie werden bei der Prüfung von Leiterplatten Fehler mit optischen Verfahren auf Serien von Prüflingen ermittelt.

Gemeinsam ist allen diesen Anwendungen der Bedarf an schneller Prüfung einer hohen Anzahl von in der Regel gleichartigen Prüflingen. Solche Objekte sind Leiterplatten, Wafer, Solarzellen, Displays und dergleichen. Gemeinsam ist den Anwendungen auch der Einsatz von Sensoren zur Erzeugung von großflächigen Abbildungen der Prüflinge. Die Abbildungen können je nach Art des gesuchten Fehlers sowohl mit optisch fotografierenden Systemen als auch mit punktuell arbeitenden Sensoren erzeugt werden. Optisch fotografierende Systeme sind beispielsweise Flächen- oder Zeilenkameras. Punktuell arbeitende Sensoren sind beispielsweise Detektoren zur Messung der Reflektion von optischen Strahlen, Mikrowellen oder Schallwellen. Es können auch magnetische Sensoren eingesetzt werden.

### Stand der Technik

Üblicherweise werden eine Vielzahl gleichartiger Wafer oder sonstiger Objekte untersucht. Bekannte Verfahren nutzen für diesen Fall einen besonders guten, möglichst fehlerfreien Wafer als Referenzobjekt. Der fehlerfreie Wafer liefert das "golden image" als Referenz. Es ist aber auch möglich ein Referenzbild auf andere Weise zu erzeugen, beispielsweise mathematisch durch Nutzung wiederkehrender Strukturen auf einem Wafer oder durch Nutzung mehrerer Wafer.

WO 00/04488 (Rudolph) offenbart ein Verfahren zur Erzeugung eines Referenzbildes durch optische Beobachtung einer Vielzahl von bekannten, guten Wafern. Unbekannte Wafer werden dann untersucht, wobei ein Modell verwendet wird, welches dieses Referenzbild nutzt.

US 4 644 172 (Sandland) offenbart ein Inspektionsverfahren, bei welchem während eines Trainings manuell ein Referenzbild ausgewählt und gespeichert wird. In vorausgewählten Geometrien wird die Untersuchung durchgeführt und mit dem gespeicherten Referenzbild verglichen. Dabei werden auch Mittelwerte und Standardabweichungen gebildet.

US 7,012,684 B1 (Hunter) beschreibt ein Inspektionsgerät, bei dem die individuelle Signatur von reflektierten oder gestreuten Bildern detektiert und mit Signaturen anderer reflektierter oder gestreuter Bilder zu einem Referenzbild verarbeitet wird.

US 6 947 587 B1 offenbart ein Verfahren, mit dem zwei Bilder zuerst ausgerichtet werden (pixelweise verschieben und die Summe der Differenzen minimieren) und anschließend die Helligkeit mit einem brightness coincidence Filter so korrigiert, dass beide Bilder in der Summe die gleichen Helligkeitswerte haben, so dass die Differenzen bei der Bildung eines Differenzbildes nicht zu groß sind. Dadurch wird eine höhere Genauigkeit erreicht. Bekannte Verfahren nehmen ein Bild auf und vergleichen dieses mit einem - wie auch immer gewonnenen - gespeicherten Referenzbild. Die Erzeugung des Referenzbildes ist aufwändig und erfordert die manuelle Überprüfung. Es werden "Rezepte" erstellt, in denen beispielsweise Informationen über die Lage der Dies auf dem Wafer berücksichtigt werden. Der Vergleich aller Bilder einer Charge mit gleichartigen Objekten erfolgt aufgrund dieses Aufwands immer mit dem gleichen Referenzbild.

### Offenbarung der Erfindung

Es ist Aufgabe der Erfindung, die Qualität des Inspektionsverfahrens zu verbessern und die Erzeugung eines Referenzbildes zu automatisieren. Erfindungsgemäß wird die Aufgabe mit einem Verfahren mit den kennzeichnenden Merkmalen des Anspruchs 1 gelöst.

Erfindungsgemäß werden zunächst Bilder für alle Objekte der Serie aufgenommen und erst dann ein Referenzbild erstellt. Dabei werden die Bilder der Objekte der Serie verwendet. Ein perfektes Objekt (z.B. ein perfekter Wafer) ist nicht erforderlich. Bei diesem Verfahren wird das einzelne Objekt gegen die Gruppe geprüft. Auffälligkeiten, die alle Objekte der Serie aufweisen, werden dabei nicht detektiert, sondern nur Einzeldefekte. Das Referenzbild kann automatisch und ohne weiteres manuelles Verarbeiten erstellt werden.

Auf den für die Inspektion vorgesehenen Objekten sind häufig sehr kleine Strukturen vorhanden. Ein Beispiel für solche Strukturen sind Dies (Chips) auf Wafern mit Struktur-Abmessungen im Mikrometer- und Submikrometerbereich. Bei typischerweise verwendeten Inspektionsgeräten mit herkömmlichen Detektoren werden Größen im Bereich von einigen bis einigen 10, z.B. 30 Mikrometern aufgelöst. Die Mikrostrukturierung wird daher von diesen als Makro-Inspektionsgeräte bezeichneten Systemen nicht aufgelöst. Die gesuchten Defekte haben in bestimmten Anwendungsfällen wesentlich größere Abmessungen im Bereich von mm, so dass die gewählte Auflösung für sie ausreichend ist. Die Intensitäten auf benachbarten Bildpunkten weisen aber aufgrund der nicht aufgelösten Mikrostruktur möglicherweise Sprünge auf, je nachdem, wie die nicht-aufgelösten Strukturen in dem Bild liegen. Dieser Effekt ist von Bildern aus dem alltäglichen Leben bekannt, wenn die Abbildung zu grobe Bildpunkte (Pixel) hat. In Realität gerade Kanten sind abgestuft, fließende Übergänge weisen eine grobe Treppenstruktur auf. Die korrekte Ausrichtung der aufgenommenen Bilder ist dadurch erschwert bzw. nur unzureichend genau möglich.

Wenn die Objekte für die Aufnahme positioniert werden, erfolgt dies mit einer Positionierungenauigkeit, die bei normalem Aufwand größer ist, als die auf dem Objekt vorhandenen Strukturen. Da diese Strukturen nicht aufgelöst werden, führt die Positionierungenauigkeit bei herkömmlichen Anordnungen zu einem Fehler bei der Erzeugung des Referenzbildes.

Erfindungsgemäß wird die Objektposition daher durch die kennzeichnenden Merkmale des Anspruchs 1 berücksichtigt.

Der gleitende Mittelwert kann berechnet werden, indem z.B. für jeden Teilbereichspunkt die Intensitätswerte der innerhalb der Fläche eines originalen Bildpunktes liegenden Teilflächen aufsummiert und nunmehr dem zentralen Teilbereichspunkt zugewiesen wird. Mit anderen Worten: Die richtige Positionierung des Bildes erfolgt durch eine rechnerische Überabtastung. Dann können alle Bilder sehr genau so übereinander gelegt werden, dass auch die nicht-aufgelösten Strukturen übereinander liegen. Auf diese Weise kann die Genauigkeit, mit der das Referenzbild erzeugt wird, erhöht werden.

In einer bevorzugten Ausgestaltung der Erfindung ist die Serie eine Untergruppe einer größeren Charge von Objekten und für jede Untergruppe wird ein eigenes Referenzbild erzeugt. Das Referenzbild ist also sehr nahe an den Bildern von Objekten, die im Produktions- und Verfahrensablauf im gleichen Zeitraum erzeugt wurden. Da das Referenzbild automatisch, d.h. mit bloßer Rechenleistung erzeugt wird, kommt es auf die Anzahl der zu erzeugenden Referenzbilder auch nicht mehr an.

In einer weiteren Ausgestaltung kann das pro Gruppe erzeugte Referenzbild auch gespeichert und zusätzlich mit vorangegangenen und nachfolgenden Referenzbildern verglichen werden. Aus einem solchen Vergleich kann man die tendenzielle Entwicklung der gesamten Produktionsfolge der Objekte verfolgen. So kann geprüft werden, ob ggf. ganze Untergruppen oder Chargen vom allgemeinen Bild der Objekte abweichen, indem man detektiert ob und/oder wie stark die Referenzbilder voneinander abweichen. In der Halbleiterproduktion können so z.B. Fehlbelackungen ganzer Chargen oder wegdriftende Prozessparameter (z.B. Schichtdicken) automatisch erkannt werden.

Das Referenzbild kann durch Mittelwertbildung der Bilder der Serie erzeugt werden. Es kann aber auch ein Median oder ein anderes geeignetes Mittelungsverfahren verwendet werden. Darüber hinaus sind natürlich jegliche, übliche Vorverarbeitungsschritte wie De-Bayern, Glätten, Differenzieren je nach dem konkreten Detektionsziel mit dem Verfahren vereinbar. Zur Bildung des Mittelwerts der Bilder wird an jedem Bildpunkt der Mittelwert aus allen Intensitätswerten für die gleiche Stelle an verschiedenen Objekten gebildet. Bei Aufnahmen von identisch positionierten Objekten wird entsprechend immer der gleiche Bildpunkt der Aufnahme für die Mittelwertbildung verwendet.

Vorzugsweise wird die Objektposition bei der Aufnahme des digitalen Bildes bei der Erzeugung des Referenzbildes berücksichtigt. Dann darf die Objektposition von Objekt zu Objekt etwas variieren. Auch bei guter Positionierung der Objekte kann so die Qualität des Referenzbildes erhöht werden.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: zeigt 10 Waferbilder la-lj mit verschiedenen Defekten und zwei regelmäßigen, wiederkehrenden Strukturen
- Fig.2: zeigt ein aus den Waferbildern in Figur 1 erzeugtes Referenzbild
- Fig.3: zeigt Ergebnisbilder des Vergleichs der Waferbilder mit dem Referenzbild
- Fig.4: zeigt einen Sensor-Ausschnitt mit Kontrastkante
- Fig.5: zeigt das Aufnahmebild des Sensors aus Figur 4 mit gemessenen Intensitätswerten
- Fig.6: illustrierte einen ersten Schritt, bei dem eine rechnerische Überabtastung in 5x5-fach Aufteilung erfolgt und die Sensor-Rohwerte kopiert werden.
- Fig.7: illustriert einen zweiten Schritt, bei dem eine rechnerische Überabtastung erfolgt und das Ergebnis der 5x5 gleitenden Mittelung über Sensor-Rohwerte.

### Beschreibung des Ausführungsbeispiels

Die Ausführungsbeispiele werden anhand von schematischen Darstellungen eines Wafers illustriert. Es versteht sich, dass echte Bilder ein anderes Erscheinungsbild haben, an denen die Erfindung jedoch in gleicher Weise verwirklicht werden kann.

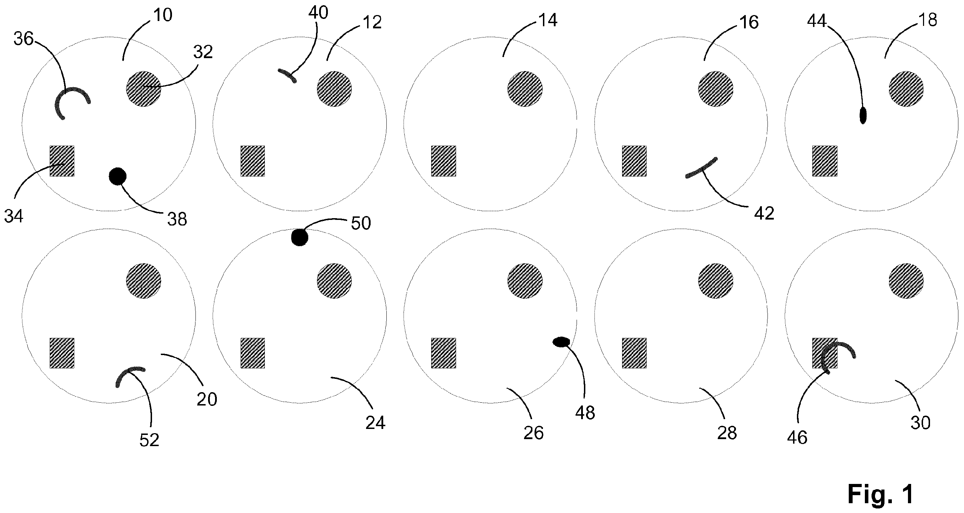

Figur 1 zeigt eine Draufsicht auf die Oberflächen zehn verschiedener Wafer, die allgemein mit 10, 12, 14, 16, 18, 20, 24, 26, 28 und 30 bezeichnet sind. Die Wafer 10, 12, 14, 16, 18, 20, 24, 26, 28 und 30 weisen Defekte auf. Wafer 10 beispielsweise weist vier Defekte 32, 34, 36 und 38 auf. Es ist leicht zu erkennen, dass alle übrigen Wafer 12, 14, 16, 18, 20, 24, 26, 28 und 30 ebenfalls Defekte aufweisen, welche zu den Defekten 32 und 34 korrespondieren. Die im vorliegenden Ausführungsbeispiel an Wafer 10 vorliegenden Defekte 36 und 38 haben keine korrespondierenden Defekte auf den übrigen Wafern 12, 14, 16, 18, 20, 24, 26, 28 und 30. Auf ähnliche Weise ist auf der Oberfläche des Wafers 12 ein Defekt 40 vorhanden, dem keiner der Defekte auf den übrigen Wafern entspricht. Auch andere Wafer 16, 18, 20, 24, 26, 28, und 30 weisen individuelle Defekte 42, 44, 46, 48, 50 und 52 auf.

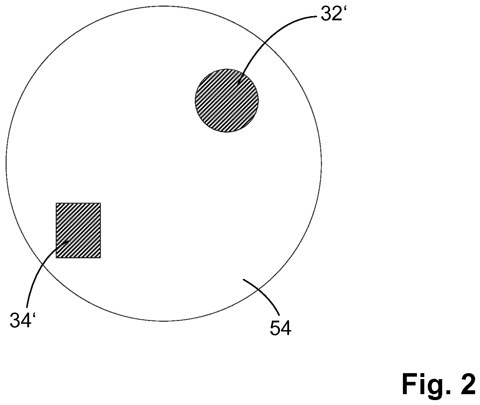

Für jeden Bildpunkt der Oberfläche des Wafers 10 und der entsprechenden Bildpunkte der Oberfläche der übrigen Wafer 12, 14, 16, 18, 20, 24, 26, 28 und 30 wird nun ein Median gebildet. In einem nicht dargestellten, alternativen Ausführungsbeispiel wird der Mittelwert gebildet. Das aus den Medianwerten zusammengesetzte Bild ist in Figur 2 dargestellt. Man erkennt das Bild einer Waferoberfläche 54 mit zwei Defekten 32' und 34'. Das entspricht genau den Defekten 32 und 34, die in allen ursprünglichen Wafern der Gruppe vorhanden waren. Sie gehen bei der Medianbildung nicht verloren. Defekte 36, 38, 40, 42, 44, 46, 48, 50 und 52 hingegen, die jeweils nur auf einem Wafer auftreten, verschwinden im Laufe der Medianbildung und sind in dem zusammengesetzten Bild 54 nicht mehr zu erkennen.

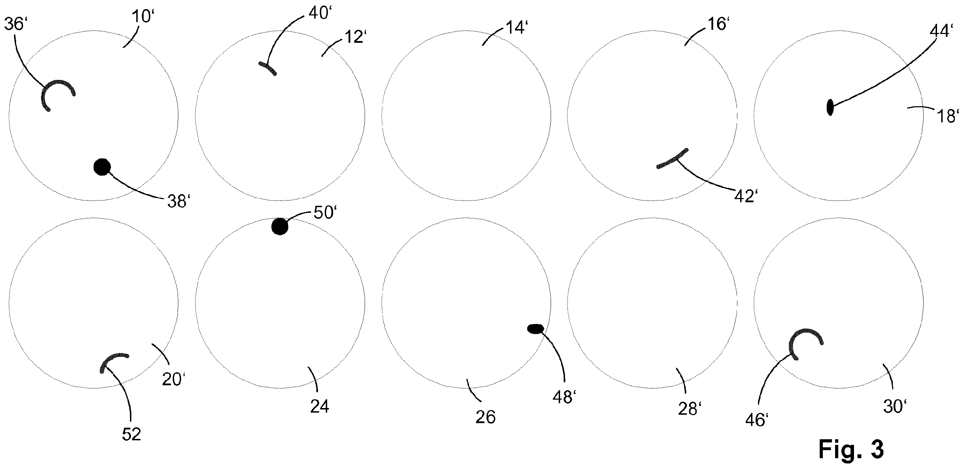

Figur 3 zeigt die Differenz der Werte auf den Bildpunkten in Figur 1 und der Werte des Referenzbildes 54 für jeden Wafer 10, 12, 14, 16, 18, 20, 24, 26, 28 und 30. Die in allen Wafern vorliegenden Defekte 32 und 34 heben sich auf und nur die individuellen Defekte 36', 38', 40', 42', 44', 46', 48', 50' und 52' bleiben erkennbar. Auf diese Weise lassen sich individuelle Defekte von Defekten und Erscheinungen, die für alle Wafer einer Gruppe vorliegen, unterscheiden und können leicht erkannt und korrigiert werden.

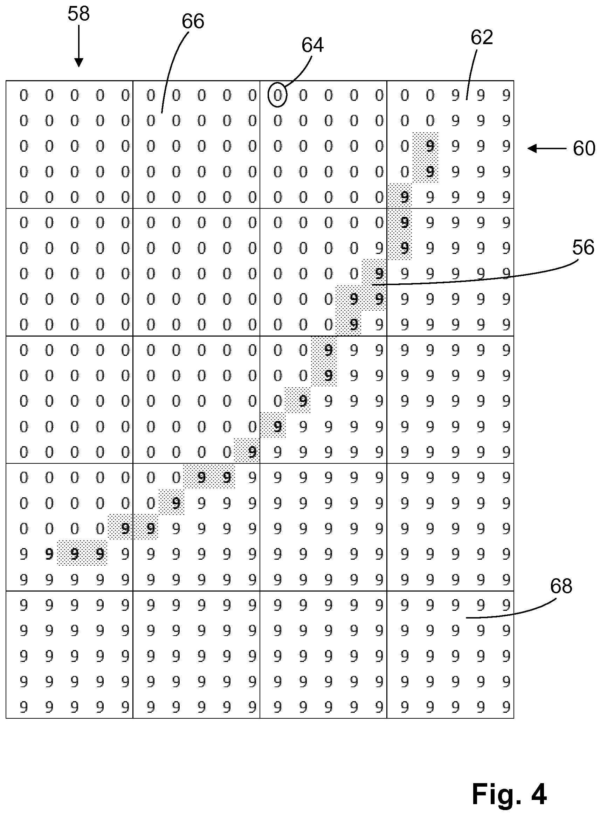

Die Ausführung der Überabtastung ist am Beispiel einer durch das Bild laufenden scharfen Kante 56 erläutert. Fig. 4 zeigt die aufgenommene Szene in einer Auflösung die 1/5 der Sensorauflösung (eingezeichnete Quadrate) entspricht. Man erkennt 4x5 Bildpunkte 62 in 4 Spalten 58 und 5 Zeilen 60. Auf jedem Bildpunkt 62 ist eine Intensitätsverteilung in Form von 5x5 Intensitätswerten 64 gezeigt. Im vorliegenden Ausführungsbeispiel haben die Bildpunkte 66 im linken oberen Bereich des Ausschnitts den Intensitätswert 0. Die Intensitätswerte auf den Bildpunkten 68 im rechten unteren Bereich des Ausschnitts haben den Intensitätswert 9. Dazwischen verläuft eine scharfe Kante 56. Die angenommene gebogene Kante 56 ist in Figur 4 hervorgehoben.

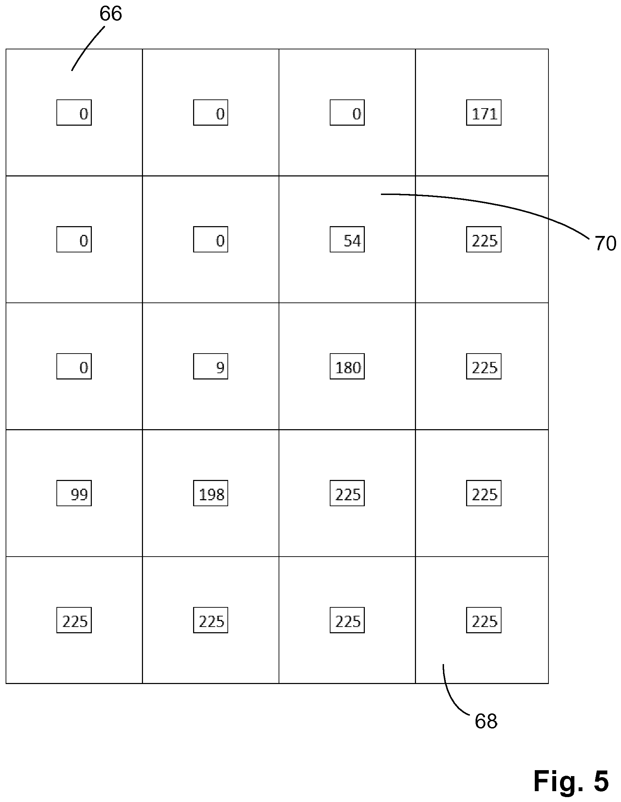

Fig. 5 zeigt, welche Rohdaten der Sensor bei seiner Aufnahme entsprechend seiner Auflösung erzeugt. Man erkennt, dass der Sensor mit den Bildpunkten 66 im linken oberen Bereich, wo alle Intensitätswerte 0 sind, den Wert 0 misst. An den Bildpunkten im rechten unteren Bereich, wo alle Intensitätswerte 9 sind, misst der Sensor den Wert 225 entsprechend der Summe aller Intensitätswerte auf den 5x5 Zellen. In dem dazwischenliegenden Bereich, in dem die Kante 56 verläuft, liegen die Messwerte dazwischen. Bildpunkt 70 des Sensors liefert beispielsweise den Wert 54, entsprechend 6 von 25 Zellen mit dem Intensitätswert 9 und 19 von Zellen mit dem Intensitätswert 0.

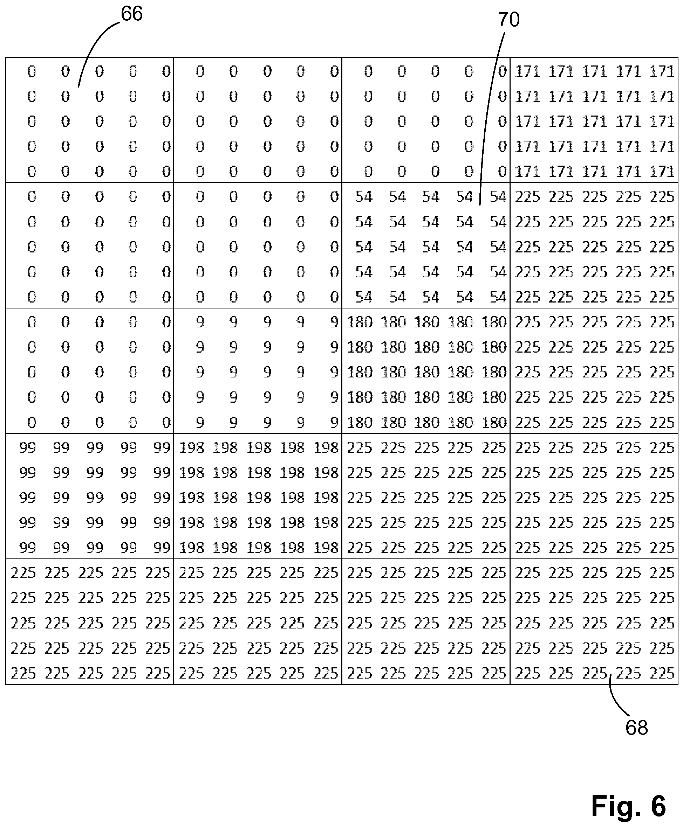

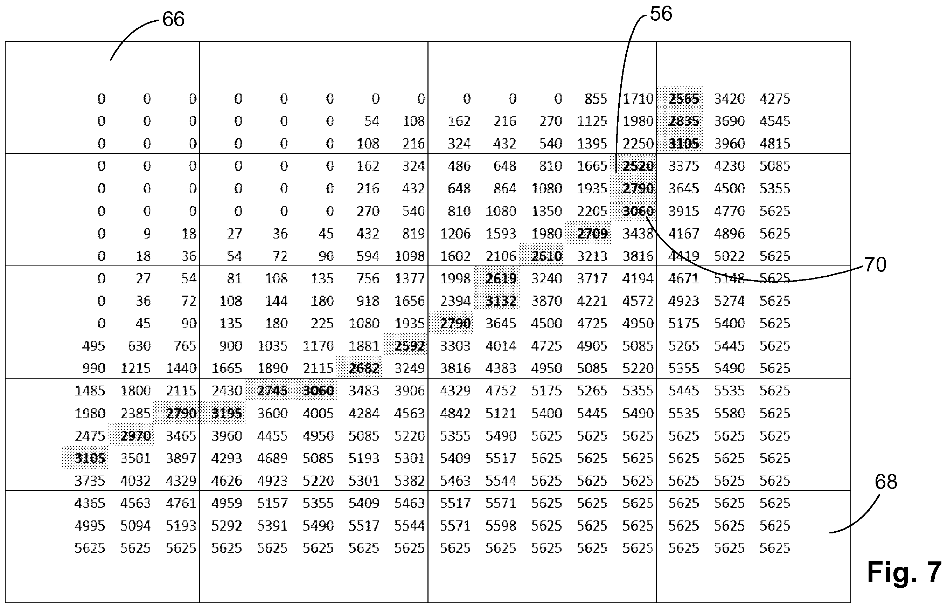

Die real vorliegende Kante kann bei der Auswertung durch rechnerische Überabtastung aufgelöst werden. In Fig. 6 und 7 wird die Überabtastung dargestellt. Beispielhaft erfolgt hier eine 5x5-fache Überabtastung. Zunächst werden die Sensorwerte aus Figur 5 auf die jeweils 5x5 Zellen kopiert, in die jeder Sensorpixel unterteilt wird. Dies ist in Figur 6 zu erkennen. Man erkennt, dass jede der 25 Zellen des Bildpunkts 70 in Figur 6 mit dem Wert 54 belegt ist. Entsprechend ist jede der 25 Zellen des Bildpunkts 66 mit dem Wert 0 und jede der 25 Zellen des Bildpunkts 68 mit dem Wert 225 belegt.

Anschließend wird durch eine gleitende Mittelung über jeweils eine Umgebung von 5x5 Zellen jeder Zelle ein neuer, gemittelter Wert zugeordnet. Dies ist in Figur 7 dargestellt. Die Mittelung bewirkt nun zwei Effekte: Zum Einen wird der Kontrastkantenverlauf geglättet. Zum anderen wird der Kantenverlauf besser, d.h. mit besserer Passfähigkeit zum in Figur 4 dargestellten Originalverlauf wieder gegeben. Man erkennt, dass die Werte der Zellen im Bildpunkt 66, wo auch die benachbarten Bildpunkte den Wert 0 haben, weiterhin die Werte 0 vorliegen und die Werte der Zellen im Bildpunkt 68, wo auch die benachbarten einen maximalen Wert haben, die Werte maximal sind. Dazwischen liegen nun mehr Zwischenwerte, als dies bei der Messung der Fall war. Die Werte im Bildpunkt 70 beispielsweise sind im rechten unteren Bereich entsprechend größer als im linken oberen Bereich, weil die benachbarten Messwerte jeweils größer bzw. kleiner waren.

Da der Wertebereich im Beispiel von 0 bis 9 gewählt wurde, ergibt sich für das so geschaffene, überabgetatstete Bild ein Wertebereich von 0 bis 5625. Die Kantenlinie 56 ist daher am Wert 5625/2 = 2812,5 zu lokalisieren. Die Zellenwerte, die diesem Wert am nächsten kommen sind in Fig. 7 hervorgehoben. Man erkennt, dass der Verlauf der Kante 56 deutlich besser den Originalverlauf widergibt als die in Figur 5 dargestellten Sensorrohdaten es vermögen.

Mit diesem Verfahren ist es möglich, Strukturen besser zu lokalisieren als mit den Sensorrohdaten. Dies kann z.B. beim Ausrichten der Bilder gegeneinander (sogenannte Registrierung) und bei der Detektion von Defekten und Abweichungen genutzt werden. Insbesondere für die Ausrichtung können bei Nutzung der nach diesem Verfahren bearbeiteten Bilder bekannte Algorithmen wie Kantendetektion, Feature-Erkennung, Pattern-Matcher besser und genauer eingesetzt werden.

Die erforderliche gleitende Mittelwertbildung (Schritt 2 - Fig. 7) kann mit jedem bekannten geeigneten Mittelungsverfahren durchgeführt werden. Z.B. kann auch der Median verwendet werden.

Die vorstehenden Ausführungen wurden anhand eines Detektorausschnitts mit der Größe von 4 Spalten mal 5 Zeilen entsprechend 20 Bildpunkten illustriert. Es versteht sich, dass reale Detektoren und die von ihnen erzeugten Bilder in der Regel erheblich größer sind und Abmessungen von mehreren Millionen Pixeln erreichen können. Auch können völlig andere Zahlenwerte und Verläufe vorliegen. Insbesondere ist das Verfahren auch für die Aufnahme mit einer Zeilenkamera, mehreren kleineren Detektoren und den aus diesen Aufnahmen zusammengesetzten Bildern verwendbar.

## Patentansprüche

1. Verfahren zur Inspektion von flachen Objekten (10, 12, 14, 16, 18, 20, 24, 26, 28, 30) mit den Schritten:
(a) Aufnehmen jeweils eines digitalen Bildes der Objektoberfläche mehrerer gleichartiger Objekte (10, 12, 14, 16, 18, 20, 24, 26, 28, 30) einer Serie, wobei jedes digitale Bild aus einer Vielzahl von Bildpunkten mit einem diesem Bildpunkt zugeordneten Intensitätswert besteht; und
(b) Erfassen von Defekten (32, 34, 36, 38, 40, 42, 44, 46, 48, 50, 52) auf der jeweiligen Objektoberfläche durch Vergleich des aufgenommenen Bildes mit einem Referenzbild (54);
(c) wobei die Bilder der Objekte (10, 12, 14, 16, 18, 20, 24, 26, 28, 30) der gesamten Serie vor dem Vergleich mit dem Referenzbild (54) aufgenommen werden, und
(d) das Referenzbild (54) aus mehreren oder allen Bildern der Serie erzeugt wird, wobei
(i) die Bildpunkte (62) der zur Erzeugung des Referenzbildes verwendeten aufgenommenen Bilder rechnerisch in mehrere Teilbereiche (58, 60) aufgeteilt werden, denen zunächst jeweils der Intensitätswert des Bildpunktes (62) zugeordnet ist, aus dem sie hervorgegangen sind;
(ii) ein gleitender Mittelwert der Intensitätswerte der Teilbereiche berechnet wird, indem für jeden Teilbereichspunkt die Intensitätswerte der innerhalb der Fläche eines originalen Bildpunktes liegenden Teilflächen aufsummiert und dem zentralen Teilbereichspunkt zugewiesen wird;
(iii) die mit dem durch gleitende Mittelwertbildung erzeugten Bilder übereinandergelegt und um einen Betrag gegeneinander verschoben werden, bei dem eine minimale Differenz der korrespondierenden Intensitätswerte der Teilbereiche erreicht wird; und
(iv) das Referenzbild mit den um diesen Betrag verschobenen, aufgenommenen Bildern erzeugt wird.

2. Verfahren nach Anspruch 1, **dadurch gekennzeichnet, dass** die Serie eine Untergruppe einer größeren Charge von Objekten ist und für jede Untergruppe ein eigenes Referenzbild erzeugt wird.

3. Verfahren nach Anspruch 1 oder 2, **dadurch gekennzeichnet, dass** das Referenzbild durch Mittelwertbildung der Bilder der Serie erzeugt wird.

4. Verfahren nach einem der vorgehenden Ansprüche, **dadurch gekennzeichnet, dass** die Objektposition bei der Aufnahme des digitalen Bildes bei der Erzeugung des Referenzbildes berücksichtigt wird.

## Claims

1. Method for inspection of flat objects (10, 12, 14, 16, 18, 20, 24, 26, 28, 30) comprising the steps of:
(a) taking a digital image of the object surface of several objects (10, 12, 14, 16, 18, 20, 24, 26, 28, 30) of the same kind of a series, wherein each digital image consists of a plurality of image points with an intensity value relating to each image point; and
(b) detecting defects (32, 34, 36, 38, 40, 42, 44, 46, 48, 50, 52) on the respective object surface by comparing the taken image with a reference image (54);
(c) wherein the images of the objects (10, 12, 14, 16, 18, 20, 24, 26, 28, 30) of the entire series are taken before the comparison with the reference image (54), and
(d) the reference image (54) is generated from several or all images of the series; wherein
(i) the image points (62) of the images used for generating the reference image are mathematically separated into several image portions (58, 60) and the intensity value of the image points (62) are at first allocated to the portions, from which it is derived;
(ii) a moving average of the intensity values of the image portions is calculated by adding up the intensity values for each point of the image portion of the image portions within the area of an original image point and allocated to the central point of the image portion;
(iii) the images generated with the moving average are superimposed and shifted against each other by a value where a minimum difference of the corresponding intensity values of the image portions is achieved and
(iv) the reference image is generated with such image which is shifted by this value.

2. Method according to claim 1, **characterized in that** the series is a sub-group of a larger series of objects and each sub-group generates its own reference image.

3. Method according to claim 1 or 2, **characterized in that** the reference image is generated by averaging the images of a series.

4. Method according to any of the preceding claims, **characterized in that** the object position is taken into account when taking the digital image for generating the reference image.

## Revendications

1. Procédé destiné à l'inspection d'objets plats (10, 12, 14, 16, 18, 20, 24, 26, 28, 30) comprenant les étapes de :
(a) réalisation à chaque fois d'une image numérique de la surface d'objet respective de plusieurs objets de même nature (10, 12, 14, 16, 18, 20, 24, 26, 28, 30) d'une série, chaque image numérique se composant de plusieurs point d'image présentant une valeur d'intensité associée audit élément d'image ; et
(b) détection de défauts (32, 34, 36, 40, 42, 44, 46, 48, 50, 52) présents sur la surface d'objet respective par comparaison de l'image réalisée à une image de référence (54);
(c) les images des objets (10, 12, 14, 16, 18, 20, 24, 26, 28, 30) de toute la série étant réalisées avant la comparaison -avec l'image de référence (54), et
(d) l'image de référence (54) étant générée à partir de plusieurs ou de toutes les images de la série,
(i) les éléments d'image (62) des images réalisées, utilisées pour générer l'image de référence, étant répartis mathématiquement en plusieurs zones partielles (58, 60) auxquelles est d'abord associée à chaque fois la valeur d'intensité de l'élément d'image (62) dont elles sont issues ;
(ii) une valeur moyenne mobile des valeurs d'intensité des zones partielles étant calculée en totalisant, pour chaque point de zone partielle, les valeurs d'intensité des surfaces partielles se trouvant à l'intérieur de la surface d'un élément d'image original et en l'allouant au point central de la zone partielle;
(iii) les images générées suivant la valeur moyenne mobile sont superposées les unes aux autres et déplacées les unes par rapport aux autres selon une valeur pour laquelle une différence minimale des valeurs d'intensité correspondantes des zones partielles est atteinte ; et
(iv) l'image de référence est générée à l'aide des images réalisées qui sont déplacées selon ladite valeur.

2. Procédé selon la revendication 1, **caractérisé en ce que** la série est un sous-groupe d'un groupe d'objets plus large et une image de référence propre à chaque sous-groupe est générée.

3. Procédé selon la revendication 1 ou 2, **caractérisé en ce que** l'image de référence est générée en formant la valeur moyenne des images de la série.

4. Procédé selon l'une quelconque des revendications précédentes, **caractérisé en ce que** la position de l'objet est prise en compte lorsque l'image numérique est réalisée lors de la génération de l'image de référence.
